# EUROPÄISCHE PATENTSCHRIFT

(11) **EP 2 087 021 B1**
(45) Veröffentlichungstag und Bekanntmachung des Hinweises auf die Patenterteilung: **28.12.2011**
(21) Anmeldenummer: 07821978.9
(22) Anmeldetag: 29.10.2007
(51) Int. Cl.: C08F 290/06, C08F 265/00, C09J 4/06, C09J 133/06, C08F 299/02, C09J 7/02, C09J 151/00, C08L 51/00

(54) **STRAHLUNGSHÄRTBARE MISCHUNG, ENTHALTEND NIEDERMOLEKULARE, ETHYLENISCH UNGESÄTTIGTE VERBINDUNGEN MIT NICHT-AROMATISCHEN RINGSYSTEMEN**
RADIATION-CURABLE MIXTURE CONTAINING LOW-MOLECULAR, ETHYLENICALLY UNSATURATED COMPOUNDS HAVING NON-AROMATIC RING SYSTEMS
MÉLANGE DURCISSABLE PAR RAYONNEMENT CONTENANT DES COMPOSÉS À BAS POIDS MOLÉCULAIRE ÉTHYLÉNIQUEMENT INSATURÉS COMPRENANT DES SYSTÈMES À NOYAU NON AROMATIQUES

(30) Priorität: 27.10.2006 EP 06123081
(43) Veröffentlichungstag der Anmeldung: 12.08.2009
(73) Patentinhaber: BASF SE, 67056 Ludwigshafen (DE)
(72) Erfinder: LICHT, Ulrike, 68309 Mannheim (DE); WULFF,Dirk, 67105 Schifferstadt (DE); DÜSTERWALD, Uwe, 66851 Queidersbach (DE)
(86) Internationale Anmeldenummer: PCT/EP2007/061623
(87) Internationale Veröffentlichungsnummer: WO 2008/049932

(56) Entgegenhaltungen:
- EP-A- 1 469 036
- EP-B- 1 578 823
- WO-A-2004/081133
- DE-A1- 10 150 486
- US-A- 4 737 559
- US-A- 5 264 533
- US-B1- 6 833 041

## Beschreibung

Die Erfindung betrifft ein Gemisch, enthaltend
A) ein Polymer, welches erhältlich ist durch Polymerisation von radikalisch polymerisierbaren Verbindungen, und
B) Verbindungen mit ethylenisch ungesättigten, radikalisch polymerisierbaren Gruppen (kurz polymerisierbare Gruppe), und einem gewichtsmittleren Molekulargewicht Mw kleiner 5000 g/mol
dadurch gekennzeichnet, dass es sich bei mindestens 10 Gew.-% der Verbindungen B um Verbindungen B1 mit mindestens einem nicht-aromatischen Ringsystem handelt, wobei es sich bei dem nicht-aromatischen Ringsystem der Verbindungen B1 um ein Isocyanurat - Ringsystem oder um ein bi- oder polycyclisches cycloaliphatisches Ringsystem handelt.

Insbesondere betrifft die Erfindung die Verwendung des Gemischs als Haftklebstoffs.

Als Haftklebstoff werden u. a. lösemittelfreie Polyacrylate oder wässrige Polyacrylatdispersionen verwendet.

Bei wässrigen Polymerdispersionen ist eine Trocknung zur Entfernung des Wassers erforderlich.

Gewünscht sind daher lösemittelfreie Haftklebstoffe.

Strahlenvernetzbare Polymerisate und ihre Verwendung als Klebstoff, z. B. als Schmelzhaftklebstoff, sind z. B. aus EP-A 246 848 oder EP-A 377 199 bekannt.

Bei strahlenvernetzbaren Haftklebstoffen wird die Kohäsion, d. h. die innere Festigkeit der Klebstoffschicht, nach Beschichten des Klebstoffs auf einen Träger durch anschließende photochemisch induzierte Vernetzung erreicht.

Bei Adhäsion (Haftung zum Substrat) und Kohäsion handelt es sich um entgegengesetzte anwendungstechnische Eigenschaften. Maßnahmen, die eine Verbesserung der Adhäsion bewirken, führen im allgemeinen gleichzeitig zu einer Verschlechterung der Kohäsion und umgekehrt.

Gewünscht sind daher Maßnahmen, welche sowohl die Kohäsion als auch die Adhäsion verbessern, zumindest aber nicht eine der beiden Eigenschaften zu Lasten der anderen verbessern. Von Bedeutung ist auch eine hohe Wärmestandfestigkeit der Verklebung, d. h. auch bei höheren Temperaturen soll die Verklebung mechanischen Belastungen standhalten. Insbesondere bei industriellen Anwendungen, vor allem bei Montageklebebändern, ist eine hohe Wärmestandfestigkeit oft entscheidend für den Einsatz eines Klebstoffs.

Für besondere Anwendungen werden hohe Schichtdicken des Haftklebstoffs benötigt.

Strahlenvernetzbare Haftklebstoffe haben hier oft den Nachteil, dass eine gute Adhäsion und Kohäsion bei hohen Schichtdicken nicht mehr erreicht wird.

Aus WO 2004/081133, EP-A 1 578 823, EP-A 628 616 und EP- A 1 469 036 sind Gemische von strahlungshärtbaren Polyacrylaten und Oligomeren mit mehreren Acrylgruppen, sowie die Verwendung dieser Gemische als Haftklebstoff bekannt.

Aufgabe der vorliegenden Erfindung war eine Verbesserung der Kohäsion bei gleichzeitig guter oder ausreichender Adhäsion, sowie eine gute Wärmestandfestigkeit, insbesondere auch bei hohen Schichtdicken des Haftklebstoffs.

Demgemäß wurde das eingangs definierte Gemisch und seine Verwendung als Haftklebstoff gefunden.

Das erfindungsgemäße Gemisch enthält als wesentliche Bestandteile Polymere A) und Verbindungen B).

### Zu den Polymeren A):

Das Polymer A) ist vorzugsweise aufgebaut aus radikalisch polymerisierbaren Verbindungen (Monomere).

Vorzugsweise besteht das Polymer zu mindestens 40 Gew.-%, besonders bevorzugt zu mindestens 60 Gew.-%, ganz besonders bevorzugt zu mindestens 80 Gew.-% aus sogenannten Hauptmonomeren.

Die Hauptmonomeren sind ausgewählt aus C1-C20-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z. B. (Meth)acrylsäurealkylester mit einem C1-C10-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt.

Als Hauptmonomere bevorzugt sind die C1- bis C10-Alkylacrylate und -methacrylate, insbesondere C1- bis C8-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten, z. B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Weitere Monomere sind z. B. auch Hydroxylgruppen enthaltende Monomere, insbesondere C1-C10-Hydroxyalkyl(meth)acrylate, (Meth)acrylamid und Ureidogruppen enthaltende Monomere wie Ureido(meth)acrylate.

Als weitere Monomere seien darüberhinaus Phenyloxyethylglykolmono- (meth-)acrylat, Glydidylacrylat, Glycidylmethacrylat, Amino- (meth-)acrylate wie 2-Aminoethyl-(meth-)acrylat genannt.

Monomere, die außer der Doppelbindung noch weitere funktionelle Gruppen tragen, z. B. Isocyanat-, Amino-, Hydroxy-, Amid- oder Glycidyl-, können z. B. die Haftung auf Substraten verbessern. In Betracht kommen insbesondere auch cyclische Lactame wie N-Vinylpyrrolidon oder N-Vinylcaprolactam.

Das Polymer ist bevorzugt zu mindestens 40 Gew.-%, besonders bevorzugt zu mindestens 60 Gew.-% und ganz besonders bevorzugt zu mindestens 80 Gew.-% aus C1-C20-Alkyl(meth)acrylaten, insbesondere den oben genannten Alkyl(meth)acrylaten aufgebaut.

Vorzugsweise handelt es sich um ein durch Bestrahlung mit energiereichem Licht, z. B. UV-Licht oder Elektronenstrahlen, vernetzbares Polymer.

Entsprechend vernetzbar ist das Polymer z. B. wenn Wasserstoffprotonen von der Polymerhauptkette photochemisch, insbesondere auch unter Verwendung eines Photoinitiators oder durch Elektronenstrahlen abgetrennt werden können, so dass ein Radikal, entsteht, welches weitere chemische Reaktionen eingehen kann.

Vorzugsweise enthält das Gemisch einen Photoinitiator.

Beim Photoinitiator kann es sich z. B. um sogenannte α-Spalter handeln, das sind Photoinitiatoren, bei denen eine chemische Bindung gespalten wird, so dass 2 Radikale entstehen, die die weiteren Vernetzungs- oder Polymerisationsreaktionen initiieren.

Genannt seien z. B. Acylphosphinoxide (Lucirin^{®} Marken der BASF), Hydroxyalkylphenone (z. B. Irgacure^{®} 184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z. B. handelt es sich hierbei um Photoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Photoinitiatoren allein oder auch im Gemisch verwendet werden.

In einer besonderen Ausführungsform ist der Photoinitiator oder zumindest einer der Photoinitiatoren, falls ein Gemisch verwendet wird, an das Polymer A) gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenon- oder Benzophenonderivate, welche mindestens eine, vorzugsweise eine, ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter). Die Spacergruppe kann z. B. bis 100 C-Atome enthalten.

Geeignete Acetophenon- öder Benzophenonderivate sind z. B. in EP-A 346 734, EP-A 377 199 (1. Anspruch), DE-A 4 037 079 (1. Anspruch) und DE-A 3 844 444 (1. Anspruch) beschrieben und sind durch diesen Verweis auch in der vorliegenden Anmeldung offenbart. Bevorzugte Acetophenon- und Benzophenonderivate sind solche der Formel 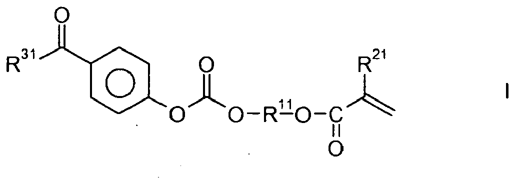 worin R11 für einen organischen Rest mit bis zu 30 C-Atomen, R21 für ein H-Atom oder eine Methylgruppe und R3 für eine gegebenenfalls substituierte Phenylgruppe oder eine C1-C4-Alkylgruppe steht.

R11 steht besonders bevorzugt für eine Alkylengruppe, insbesondere für eine C2-C8-Alkylengruppe.

R31 steht besonders bevorzugt für eine Methylgruppe oder eine Phenylgruppe.

Das erfindungsgemäße Gemisch enthält vorzugsweise 0,0001 bis 0,5 mol, besonders bevorzugt 0,0002 bis 0,1, ganz besonders bevorzugt 0,003 bis 0,01 mol des Fotoinitiators, bzw. der als Fotoinitiator wirksamen, an das Polymer gebundenen Molekülgruppe, pro 100 g der Gewichtssumme von A) + B).

Das Polymer A) hat vorzugsweise einen K-Wert von 10 bis 100, insbesondere von 30 bis 80, besonders bevorzugt von 40 bis 60, gemessen in Tetrahydrofuran (1 %ige Lösung, 21 °C).

Der K-Wert nach Fikentscher ist ein Maß für das Molekulargewicht und Viskosität des Polymerisats.

Das mit dem obigen K-Wert-Bereich verbundene Molgewicht ist weitaus höher als das Molgewicht der Verbindungen B). Das mittlere Molgewicht (sowohl das zahlenmittlere Molgewicht als auch das gewichtsmittlere Molgewicht) des Polymeren A) ist im allgemeinen mindestens doppelt, insbesondere mindestens 10 mal so hoch wie das der Verbindungen B).

Die Glasübergangstemperatur (Tg) des Polymeren A) beträgt vorzugsweise -60 bis +10 °C, besonders bevorzugt -55 bis 0 °C, ganz besonders bevorzugt -55 bis -10 °C.

Die Glasübergangstemperatur des Polymeren läßt sich nach üblichen Methoden wie Differentialthermoanalyse oder Differential Scanning Calorimetrie (s. z. B. ASTM 3418/82, sog. "midpoint temperature") bestimmen.

Polymere A) können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z. B. in Wasser oder flüssigen Kohlenwasserstoffen, oder in Lösung polymerisiert. Vorzugsweise werden die Polymeren durch Polymerisation der Monomeren in Lösungsmitteln (Lösungspolymerisation), insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120 °C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150 °C arbeitet. Die Polymeren können dann in lösungsmittelfreiem Zustand, d. h. als Schmelzen, eingesetzt werden. In manchen Fällen ist es auch von Vorteil, die Polymeren durch Polymerisation in Substanz, d. h. ohne Mitverwendung eines Lösungsmittels, herzustellen, wobei man chargenweise oder auch kontinuierlich, z. B. nach den Angaben der US-PS 4,042,768, arbeiten kann.

### Zu den Verbindungen B)

Bei Verbindungen B) handelt es sich Verbindungen mit ethylenisch ungesättigten, radikalisch polymerisierbaren Gruppen (kurz polymerisierbare Gruppe), und einem gewichtsmittleren Molekulargewicht Mw kleiner 5000 g/mol.

Wesentliches Merkmal ist, dass es sich bei mindestens 10 Gew.-% der Verbindungen B um Verbindungen mit mindestens einem nicht-aromatischen Ringsystem handelt, im nachfolgenden als Verbindungen B1 bezeichnet.

Als nicht aromatische Ringsysteme in Betracht kommen cycloaliphatische Ringsysteme oder heterocyclische Systeme, insbesondere solchen, die neben Kohlenstoff noch Stickstoff aufweisen.

Als cycloaliphatische Ringsysteme kommen einfache Ringsysteme, z. B. ein Cyclohexanring, oder auch bi- oder polycyclische Ringsysteme, z. B. Ringsysteme aus zwei Kohlenstoffsechsringen, zwei Kohlenstofffünfringen oder einem Kohlenstoffsechsring und einem Kohlenstofffünfring in Betracht; dabei kann jeweils zwischen zwei C Atomen des Ringsystems eine weitere Kohlenstoffbrücke ausgebildet sein.

Durch einfache Umsetzungen können an derartige Ringsysteme radikalisch polymerisierbare Gruppen (insbesondere Vinyl- oder Acryl- bzw. Methacrylgruppen) direkt oder gegebenenfalls über einen Abstandshalter (spacer) gebunden werden.

Geeignete Verbindungen B1 mit cycloaliphatischen Ringsystemen und polymerisierbaren Gruppen sind unter dem Handelsnamen Sartomer^{®} oder Laromer^{®} erhältlich.

Als heterocyclisches Ringsystem sei insbesondere der Isocyanurat-Ring genannt.

Isocyanurate können durch Trimersisierung von Monoisocyanaten oder Polyisocyanaten, insbesondere von Diisocyanaten, erhalten werden. Auch andere Herstellungsmethoden sind bekannt, z. B. solche bei denen von der Isocyanursäure ausgegangen wird.

Der Isocyanurat-Ring wird von insgesamt drei Isocyanatgruppen gebildet. Bei trimerisierten Polyisocyanaten ist jeweils eine Isocyanatgruppe des Polyisocyanats, bzw. Diisocyanats, Bestandteil des Rings, die anderen Isocyanatgruppen sind frei und stehen für weitere Umsetzungen zur Verfügung. Die freien Isocyanatgruppen können leicht mit Verbindungen umgesetzt werden, die radikalisch polymersierbare Gruppen enthalten. Sehr einfach ist z. B. die Umsetzung mit Hydroxyalkylacrylaten. Bei trimerisierten Monoisocyanten wird der Isocyanurat-Ring von den drei vorhandenen Isocyanatgruppen gebildet. Die radikalisch polymerisierbaren Gruppen werden durch Umsetzung mit geeigneten anderen funktionellen Gruppen der Monoisocyanate angebunden.

Als Isocyanurate bevorzugt sind die Isocyanurate der üblichen Diisocyanate.

Insbesondere zu nennen sind Diisocyanate X(NCO)2, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Besonders bevorzugte Verbindungen B1 sind die vorstehenden Isocyanurate, welche durch Umsetzung mit geeigneten reaktiven Verbindungen, insbesondere mit Hydroxyalkyl(meth)acrylaten, (Meth)acrylgruppen enthalten.

Verbindungen B1 können neben dem nicht-aromatischen Ringsystem auch aromatische Ringsysteme oder aliphatische Molekülgruppen enthalten.

Vorzugsweise bestehen Verbindungen B1 zu mindestens 5 Gew.-%, bezogen auf ihre Molmasse, aus Kohlenstoff- oder Stickstoffatomen, die Bestandteil eines Ringsystems sind. Es werden nur die Atome, die den Ring bilden, berücksichtigt, nicht die Substituenten dieser Atome; der Isocyanurat-Ring wird z. B. von jeweils drei Kohlenstoff und drei Stickstoffatomen gebildet (36 + 42 = 78 g), dieser Wert wird in Bezug zur gesamten Molmasse gesetzt.

Besonders bevorzugt bestehen Verbindungen B1 zu mindestens 7 Gew.-%, insbesondere zu mindestens 10 Gew.-%, ganz besonders bevorzugt zu mindestens 15 und in einer besonderen Ausführungsform zu mindestens 20 Gew.-%, bezogen auf ihre Molmasse, aus Kohlenstoff- oder Stickstoffatomen, die Bestandteil eines Ringsystems sind. Bevorzugt bestehen Verbindungen B1 zu nicht mehr als 70 Gew.-%, besonders bevorzugt zu nicht mehr als 50 Gew.-%, bzw. zu nicht mehr als 45 Gew.-% und ganz besonders bevorzugt zu nicht mehr als 35 Gew.-% aus Kohlenstoff- oder Stickstoffatomen, die Bestandteil eines Ringsystems sind.

Geeignete Verbindungen B1 mit einem Isocyanurat-Ring und polymerisierbaren Gruppen sind ebenfalls unter dem Handelsnamen Sartomer^{®} oder Laromer^{®} erhältlich.

Verbindungen B können neben Verbindungen B1 weitere Verbindungen enthalten.

Vorzugsweise handelt es sich bei mindestens 30 Gew.-%, besonders bevorzugt bei mindestens 50 Gew.-%, ganz besonders bevorzugt bei mindestens 80 Gew.-% und insbesondere bei 100 Gew.-% der Verbindungen B um Verbindungen B1.

Als Verbindungen B) kommen neben B1 auch andere Verbindungen in Betracht.

Genannt seien z. B. die oben aufgeführten Monomere zu nennen, aus denen das Polymer A) aufgebaut sein kann. Insbesondere zu nennen sind Acrylmonomere mit einer Acryl- oder Methacrylgruppe.

Genannt seien insbesondere Meth)acrylatverbindungen mit mehreren Acrylgruppen.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z. B. bifunktionelle Alkohole, wie Ethylenglykol, Propylenglykol, und deren höher kondensierte Vertreter, z. B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d. h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die (Meth)Acrylsäureester von Polyesterolen handelt.

Als Polyesterole kommen z. B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z. B. in EP 279 303 beschrieben, aus Acrylsäure, Polycarbonsäure, Polyol hergestellt werden.

Weiterhin kann es sich bei Verbindungen B) z. B. um Epoxid- oder Urethan(meth)-acrylate handeln.

Epoxid(meth)acrylate sind z. B. solche wie sie durch Umsetzung von epoxidierten Olefinen oder Poly- bzw. Mono- oder Diglycidylethern, wie Bisphenol-A-diglycidylether, mit (Meth)acrylsäure erhältlich sind.

Die Umsetzung ist dem Fachmann bekannt und z. B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984).

Die nachstehenden Ausführungen gelten für alle Verbindungen B, unabhängig davon ob es sich ausschließlich um Verbindungen B1 oder Gemische von B1 mit sonstigen Verbindungen B handelt.

Verbindungen B), sind vorzugsweise bei 21 °C, 1 bar flüssig; wenn es sich um bei 21 °C, 1 bar feste Verbindungen handelt, sollten sich diese Verbindungen in dem Polymer A) gut lösen.

Die Viskosität der Verbindungen B, bzw. des Gemisches der Verbindungen B beträgt vorzugsweise 0,01 bis 50 Pas, besonders bevorzugt 0,04 bis 10 Pas bei 23 °C, 1 bar, gemessen nach DIN EN ISO 3219; ganz besonders bevorzugt beträgt die Viskosität 0,04 bis 2 und insbesondere 0,04 bis 1 Pas.

Das gewichtsmittlere Molekulargewicht Mw der Verbindungen B liegt bevorzugt unter 5000, besonders bevorzugt unter 3000 g/mol (bestimmt durch Gelpermeationschromatographie mit Polystyrol als Standard und Tetrahydrofuran als Elutionsmittel). Ganz besonders bevorzugt liegt es unter 2000 g/mol.

Im Mittel haben Verbindungen B im Mittel 1 bis 5, vorzugsweise 1,5 bis 3, besonders bevorzugt 2 bis 3, in einer besonderen Ausführungsform 2 bis 2,5 polymerisierbare Gruppen pro Molekül.

### Zur Mischung von A) und B)

Das Gemisch von A) und B) eignet sich als Bindemittel, z. B. für Haftklebstoffe, wobei der Gewichtsanteil von A) vorzugsweise maximal 99 Gew.-%, besonders bevorzugt maximal 95 Gew.-% und vorzugsweise mindestens 30 Gew.-%, besonders bevorzugt mindestens 50 bzw. mindestens 60 Gew.-% beträgt.

Entsprechend beträgt der Gewichtsanteil von B) vorzugsweise maximal 70 Gew.-%, besonders bevorzugt maximal 50 Gew.-% bzw. maximal 40 Gew.-% und vorzugsweise mindestens 1 Gew.-%, besonders bevorzugt mindestens 5 Gew.-%.

Geeignete Gewichtsbereiche von A) und B) sind insbesondere:
- für A):: 99 bis 30 Gew.-%, besonders bevorzugt 95 bis 50 Gew.-%, ganz besonders bevorzugt 95 bis 60 Gew.-% und insbesondere 95 bis 70 Gew.-%
- für B):: entsprechend 1 bis 70 Gew.-%, besonders bevorzugt 5 bis 50 Gew.-%, ganz besonders bevorzugt 5 bis 40 Gew.-% und insbesondere 5 bis 30 Gew.-%.

Sämtliche Gewichtsangaben für A) und B) sind dabei auf die Gewichtssumme von A) und B) bezogen.

Das Gemisch von A) und B) kann nach üblichen Verfahren hergestellt werden.

Vorzugsweise wird Polymer A) erhitzt, z. B. auf Temperaturen zwischen 50 und 130 °C, und Verbindungen A) werden, gegebenenfalls zusammen mit weiteren Zusatzstoffen, eingerührt.

### Zur Verwendung als Haftklebstoff

Das Gemisch eignet sich als Bindemittel für Haftklebstoffe. Die Haftklebstoffe können allein aus dem Gemisch von A) und B) bestehen.

In Betracht kommen insbesondere Schmelzhaftklebstoffe, die Wasser oder sonstige Lösemittel, z. B. aus der Lösungspolymerisation von A), allenfalls in geringen Mengen enthalten und aus der Schmelze aufgetragen werden.

Vorzugsweise enthält der Haftklebstoff, bzw. Schmelzhaftklebstoff, weniger als 5 Gew.-Teile, insbesondere weniger als 2 bzw. 1 Gew.-Teil Wasser und/oder Lösemittel auf 100 Gew.-Teile der Gewichtssumme von A) und B). Besonders bevorzugt ist der Haftklebstoff, bzw. Schmelzhaftklebstoff im wesentlichen frei von Wasser und sonstigen Lösemitteln.

Vorzugsweise enthält der Haftklebstoff mindestens einen Photoinitiator (s. oben). Soweit es sich dabei nicht um einen an das Polymer gebundenen Photoinitiator handelt, kann der Photoinitiator dem Gemisch von A) und B) oder bereits den Komponenten A) oder B) zu jeder Zeit zugesetzt werden.

Weitere Additive, welche dem Haftklebstoff zugesetzt werden können, sind z. B. Füllstoffe, Farbstoffe, Verlaufshilfsmittel und insbesondere Tackifier (klebrigmachende Harze).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht Mw unter 30 000. Die Polyacrylate bestehen bevorzugt zu mindestens 60, insbesondere mindestens 80 Gew.-% aus C1-C8 Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt z. B. 5 bis 100 Gew.-Teile, besonders bevorzugt 10 bis 50 Gew.-Teile. bezogen auf 100 Gew.-Teile der Gewichtssumme von A) + B).

Die Haftklebstoffe werden vorzugsweise als Schmelzhaftklebstoffe verwendet, d. h. sie werden aus der Schmelze auf die gewünschten Träger aufgetragen.

Insbesondere eigenen sich die erfindungsgemäßen Haftklebstoffe bzw. Schmelzklebstoffe zur Herstellung von selbstklebenden Artikeln, wie Etiketten, Klebebändern oder Klebefolien, z. B. Schutzfolien.

Die selbstklebenden Artikel bestehen im allgemeinen aus einem Träger und einer ein- oder beidseitig, vorzugsweise einseitig aufgebrachten Schicht des Klebstoffs.

Bei dem Trägermaterial kann es sich z. B. um Papier, Kunststofffolien aus Polyolefinen oder PVC handeln.

Die selbstklebenden Artikel werden insbesondere dadurch hergestellt, dass der Haftklebstoff auf den Träger aufgebracht wird und anschließend eine Vernetzung mit UV-Licht oder Elektronenstrahlen erfolgt.

Ein besonderer Vorteil der Erfindung ist, dass selbstklebende Artikel mit großen Auftragsmengen, d. h. mit dicken Haftklebstoffschichten hergestellt werden können.

Die Auftragsmenge kann insbesondere 10 bis 300 g, vorzugsweise 10 bis 150 g, und üblicherweise oft 20 bis 80 g pro Quadratmeter Träger betragen.

Der beschichtete Träger wird mit energiereichem Licht, vorzugsweise UV-Licht, bestrahlt, um die gewünschte Vernetzung zu erreichen. Die Strahlungsenergie kann z. B. 10 mJ/cm2 bis 1500 mJ/cm2 bestrahlte Fläche betragen.

Als selbstklebende Artikel sind Etiketten oder Montageklebebänder bevorzugt.

Bevorzugt sind außerdem Schutzfolien. Die Schutzfolie soll Gegenstände bei Transport oder Lagerung schützen. Die Schutzfolien können vom Gegenstand rückstandsfrei von Hand wieder abgezogen werden.

Die selbstklebenden Artikel eignen sich für unterschiedlichste Substrate. Die Substrate können z. B. aus Metallen, Papier, Karton, Holz, Kunststoffen etc. sein.

Generell wird eine sehr gute Adhäsion und eine besonders hohe Kohäsion, auch bei größeren Schichtdicken, erreicht.

Insbesondere ist auch die Wärmefestigkeit verbessert, d. h. die Verklebungen halten auch bei hohen Temperaturen. Die erfindungsgemäßen Gemische bzw. Haftklebstoffe eignen sich besonders auch für Montageklebebänder, welche bei der industriellen Produktion, z. B. von Kraftfahrzeugen, Verwendung finden.

### Beispiel 1: UV-vernetzbares Polymer

In einer Polymerisationsapparatur bestehend aus Glasreaktor mit Heiz-kühlkreislauf, Rührer, Thermoelement, Rückflusskühler, Stickstoffeinlass und Dosiergefäßen werden in leichtem Stickstoffstrom 364g Methylethylketon (MEK) vorgelegt und auf 80 °C erwärmt. Es wird 100 g einer Monomeren Mischung bestehend aus 94,8 % n.Butylacrylat, 5 % Acrylsäure und 0,18 % eines Fotoinitiator der Formel I zugegeben. Nach Wiedererreichen von 80 °C werden 4,9 g einer Starterlösung aus 13,07 g tert.Butyl-perpivalat und 86,7 g MEK zugegeben und 10 min anpolymerisiert, Dann werden 1906 g Monomerenmischung in 3 h und 94,75 g Starterlösung in 3 h 15 min. zugefahren. Anschließend wird eine Lösung von 6,4 g tert.butyl-perpivalat in 41,6 g MEK in 5 min zugegeben und die Temperatur auf 85 °C erhöht und 45 min auspolymerisiert. Dann werden 0,6 g 2,6-Di-tert. Butyl-p-Kresol zugegeben und die Lösung abgekühlt und abgefüllt.
Feststoffgehalt: 80,3% K-Wert: 49,2

### Beispiel 2: Gemisch mit Isocyanurat

990 g Polymerlösung aus Beispiel 1 werden mit 0,0031 g 4-Hydroxy-Tempo versetzt und im Vakuum vom Lösungsmittel befreit und dabei auf 135 °C erwärmt. Das Polymer wird auf 110 °C abgekühlt und mit 62,4 g eines auf 80 °C vorgewärmten Triacrylates des Hexamethylendiisocyanats-Trimeren (Isocyanurat aus 3 Molekülen Hexamethylendiisocyanat und 3 Molekülen Hydroxyethylacrylat, Anteil der Ringatome 9 Gew.-%) und 26,7 g Lucirin TPO-L versetzt und noch 1 h gerührt dann abgelassen.

Nullviskosität bei 110 °C 78,4 Pas

### Beispiel 3: Gemisch mit Cycloaliphat

878 g Polymerlösung aus Beispiel 1 werden mit 0,04g 4-Hydroxy-Tempo, 0,6 g Hydrochinonmonomethylether, 0,2 g 2,6-Di-tert.Butyl-pKresol versetzt und im Vakuum vom Lösungsmittel befreit und dabei auf 135 °C erwärmt. Das Polymer wird auf 110 °C abgekühlt und mit 55,7 g auf 80 °C vorgewärmten Sartomer SR 833 S und 23,9 g Lucirin TPO-L versetzt und noch 1 h gerührt dann abgelassen.

Formel von Sartomer S 833 (Anteil der Ringatome 39 Gew.-%):

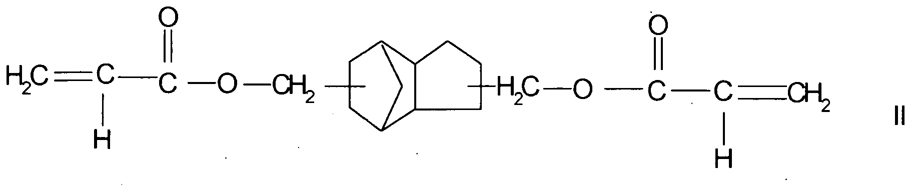

Nullviskosität bei 110 °C 90 Pas

### Beispiel 4

In einer Polymerisationsapparatur bestehend aus einem Glasreaktor mit Heiz-kühlkreislauf, Rührer, Thermoelement, Rückflusskühler, Stickstoffeinlass und Dosiergefäßen werden in leichtem Stickstoffstrom 456 g Methylethylketon (MEK) vorgelegt und auf 80 °C erwärmt. Es wird 120 g einer Monomeren Mischung bestehend aus 94,73 % n.Butylacrylat, 5 % Acrylsäure und 0,27 % eines Fotoinitiator der Formel I zugegeben. Nach Wiedererreichen von 80 °C werden 5,4 g einer Starterlösung aus 19,3 g tert.Butyl-perpivalat und 88,8 g MEK zugegeben und 10 min anpolymerisiert, Dann werden 2291 g Monomerenmischung in 3 h und 102,6 g Starterlösung in 3 h 15 min. zugefahren. Anschließend wird eine Lösung von 6,4 g tert.butyl-perpivalat in 52 g MEK in 5 min zugegeben und die Temperatur auf 85 °C erhöht und 45 min auspolymerisiert. Die Lösung wird abgekühlt.
Feststoffgehalt: 80,1 % K-Wert: 48,0

### Beispiel 5: Gemisch mit Isocyanaurat

561 g Polymerlösung aus Beispiel 4 werden mit 0,018 g 4-Hydroxy-Tempo, versetzt und im Vakuum vom Lösungsmittel befreit und dabei auf 135 °C erwärmt. Das Polymer wird auf 110 °C abgekühlt und mit 35 g auf 80 °C vorgewärmten Sartomer SR 368 und 15 g Lucirin TPO-L versetzt und noch 1 h gerührt.

Formel von Sartomer SR 368 (Anteil der Ringatome 18 Gew.-%):

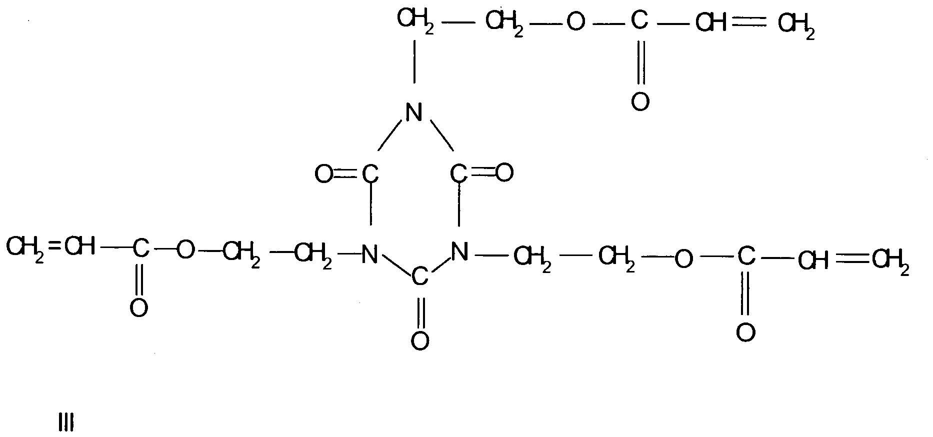

Nullviskosität bei 110 °C : 46 Pas

### Beispiel 6: Gemisch mit Isocyanaurat

728 g Polymerlösung aus Beispiel 4 werden mit 0,021 g 4-Hydroxy-Tempo, versetzt und im Vakuum vom Lösungsmittel befreit und dabei auf 135 °C erwärmt. Das Polymer wird auf 110 °C abgekühlt und mit 57,6 g einer 79%igen acetonischen Lösung eines Triacrylates aus IPDI-Trimer (aus 3 Molekülen Isophorondiisocyanat und 3 Molekülen Hydroxyethylacrylat, Anteil der Ringatome 29 Gew.-%) versetzt. Es werden noch 21 g Lucirin TPO-L zugegeben. Danach wird noch bei 110 °C 15 min im Vakuum weiterentgast. Die Mischung wird abgelassen.

Nullviskosität bei 110 °C:116 Pas.

### Vergleichsbeispiel 1

536 g Polymerlösung aus Beispiel 1 werden mit 0,0018 g 4-Hydroxy-Tempo, versetzt und im Vakuum vom Lösungsmittel befreit und dabei auf 135 °C erwärmt. Das Polymer wird auf 110 °C abgekühlt und mit 35,14 g auf 80 °C vorgewärmten Hexamethylendiacrylat und 15 g Lucirin TPO-L versetzt und noch 1 h gerührt dann abgelassen.

Nullviskosität bei 110 °C : 43 Pas

### Prüfmethoden

Die Gemische wurden ohne weitere Zusätze als Schmelzhaftklebstoff verwendet. Sie wurden auf 95 °C aufgeheizt und mittels eines Balkenrakels direkt auf eine Polyethylentherephthalat (PETP)-Foilie beschichtet (Kleberauftragsmenge 60 g trocken/m2).

Danach wurden die beschichteten Folien mit UV-Licht bestrahlt. Die Bestrahlungsdosis ist in der Tabelle angegeben (H-Spektrum; Hg-Mitteldruck, 120 W/cm).

Danach wurden folgende Prüfungen durchgeführt:
Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 25 mm2 auf die Prüffläche aus Stahl (Afera-Stahl) geklebt, mit einer 1 kg schweren Rolle 1 mal angerollt, 10 min gelagert (im Normklima, 50 % rel. Luftfeuchtigkeit 1 bar, 23 °C) und anschließend hängend mit einem 1 kg Gewicht belastet (im Normklima). Das Maß für die Scherfestigkeit war die Zeit bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf die Prüffläche aus Stahl geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d. h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab.

Die Schälfestigkeit wurde 24 Stunden nach der Verklebung bestimmt. Nach dieser Zeit hat sich die Klebekraft voll ausgebildet.

Für den SAFT Test (Shear Adhesion Failure Temperature, Wärmefestigkeit) wurden die Proben wie für den Schertest vorbereitet, auf Stahl geklebt, dabei jedoch 4 mal mit einer 2 kg schweren Rolle angerollt und 16 Stunden im Normklima gelagert. Die Proben wurden dann in einem klimatisierten Trockenschrank aufgehängt, mit 1 kg belastet und die Temperatur wurde in Stufen von 0,5 °C/min erhöht. Als Maß für die Wärmefestigkeit gilt die Temperatur, bei der das Gewicht abfällt. Angegeben ist der Mittelwert aus drei Messungen.

**Tabelle: Ergebnisse der Prüfungen**

| Beispiel | UV-C Dosis | Scherfestigkeit | Schälfestigkeit auf Stahl | S.A.F.T Test |
|---|---|---|---|---|
| | mJ/cm2 | Minuten | N/25 mm | °C |
| Beispiel 2 | 20 | | 22,6 | 56 |
| | 30 | 783 | 23,1 | 66 |
| | 50 | | 23,3 | 87 |
| Beispiel 3 | 20 | 209 | 27,0 | 84 |
| | 30 | > 6000 | 25,8 | |
| | 50 | > 6000 | 20,1 | 167 |
| Beispiel 5 | 20 | > 6000 | 25,3 | > 180 |
| | 30 | > 6000 | 23,4 | > 180 |
| | 50 | > 6000 | 17,4 | > 180 |
| Beispiel 6 | 19 | > 6000 | 18,0 | 164 |
| Vergleichs-Beispiel 1 | 20 | 8 | 20,7 | 43 |
| | 30 | 4 | 19,7 | 47 |
| | 50 | 33 | 21,1 | 79 |

## Patentansprüche

1. Gemisch, enthaltend
A) ein Polymer, welches erhältlich ist durch Polymerisation von radikalisch polymerisierbaren Verbindungen, und
B) Verbindungen mit ethylenisch ungesättigten, radikalisch polymerisierbaren Gruppen (kurz polymerisierbare Gruppe), und einem gewichtsmittleren Molekulargewicht Mw kleiner 5000 g/mol
**dadurch gekennzeichnet, dass** es sich bei mindestens 10 Ges.-% der. Verbidungen B um Verbindungen B1 mit mindestens einem nicht-aromatischen Ringsystem handelt, wobei es sich bei dem nicht-aromatischen Ringsystem der Ver bindungen B1 um ein Isocyanurat - Ringsystem oder um ein bi-oder polycyclisches cycloaliphatisches Ringsystem handelt.

2. Gemisch gemäß Anspruch 1, **dadurch gekennzeichnet, dass** das Polymer A) zu mindestens 40 Gew.-% aus C1-C20-Alkyl(meth)acrylaten aufgebaut ist.

3. Gemisch gemäß einem der Ansprüche 1 oder 2, **dadurch gekennzeichnet, dass** das Polymer durch Bestrahlung mit energiereichem Licht vernetzbar ist.

4. Gemisch gemäß einem der Ansprüche 1 bis 3, **dadurch gekennzeichnet, dass** an das Polymer ein Fotoinitiator gebunden ist.

5. Gemisch gemäß einem der Ansprüche 1 bis 4, **dadurch gekennzeichnet, dass** das Polymer einen K-Wert von 10 bis 100 (Tetrahydrofuran, 1gew%ige Lösung, 21 °C) hat.

6. Gemisch gemäß einem der Ansprüche 1 bis 5, **dadurch gekennzeichnet, dass** es sich bei dem Polymer um ein Lösungspolymerisat handelt.

7. Gemisch gemäß einem der Ansprüche 1 bis 6, **dadurch gekennzeichnet, dass** es sich bei dem nicht-aromatischen Ringsystem der Verbindungen B1 um ein bi- oder polycyclisches cycloaliphatisches Ringsystem handelt.

8. Gemisch gemäß einem der Ansprüche 1 bis 6, **dadurch gekennzeichnet, dass** es sich bei dem nicht-aromatischen Ringsystem der Verbindungen B1 um ein Isocyanurat - Ringsystem handelt.

9. Gemisch gemäß einem der Ansprüche 1 bis 8, **dadurch gekennzeichnet, dass** es sich bei mindestens 50 Gew.-% der Verbindungen B um Verbindungen B1 handelt.

10. Gemisch gemäß einem der Ansprüche 1 bis 9, **dadurch gekennzeichnet, dass** Verbindungen B1 zu mindestens 10 Gew.-%, bezogen auf ihre Molmasse, aus Kohlenstoff- oder Stickstoffatomen bestehen, die Bestandteil eines Ringsystems sind.

11. Gemisch gemäß einem der Ansprüche 1 bis 10, **dadurch gekennzeichnet, dass** die Verbindungen B) im Mittel 1 bis 5 polymerisierbare Gruppen pro Molekül enthalten.

12. Gemisch gemäß einem der Ansprüche 1 bis 11, **dadurch gekennzeichnet, dass** es sich bei den polymerisierbaren Gruppen der Verbindungen B um Acryl- oder Methacrylgruppen handelt.

13. Gemisch gemäß einem der Ansprüche 1 bis 12, **dadurch gekennzeichnet, dass** der Gewichtsanteil der Verbindungen B) 5 bis 70 Gew.-%, bezogen auf die Gewichtssumme von A) +B), beträgt

14. Gemisch gemäß einem der Ansprüche 1 bis 13, **dadurch gekennzeichnet, dass** das Gemisch 0,0001 bis 0,5 mol eine Fotoinitiators oder einer Fotoinitiatorgruppe pro 100g der Gewichtsumme von Polymer A) und Verbindungen B) enthält.

15. Gemisch gemäß einem der Ansprüche 1 bis 14, **dadurch gekennzeichnet, dass** das Gemisch weniger als 5 Gew.-Teile Wasser oder Lösemittel, bezogen auf 100 Gew.-Teile der Gewichtssumme aus A) und B) enthält.

16. Verwendung des Gemischs gemäß einem der Ansprüche 1 bis 15 als Haftklebstoffs.

17. Selbstklebend Etiketten, Folien oder Bänder erhältlich durch Verwendung des Gemischs gemäß einem der Ansprüche 1 bis 15 als Haftklebstoff.

18. Verfahren zur Herstellung von selbstklebenden Artikeln, **dadurch gekennzeichnet, dass** ein Gemisch gemäß einem der Ansprüche 1 bis 15 auf einen Träger aufgetragen wird und mit energiereicher Strahlung bestrahlt wird.

## Claims

1. A mixture comprising
A) a polymer obtainable by polymerizing free-radically polymerizable compounds, and
B) compounds containing ethylenically unsaturated, free-radically polymerizable groups (polymerizable groups for short) and having a weight-average molecular weight Mw of less than 5000 g/mol,
wherein at least 10% by weight of the compounds B are compounds B1 containing at least one nonaromatic ring system, the nonaromatic ring system of the compounds B1 being an isocyanurate ring system or a bicyclic or polycyclic cycloaliphatic ring system.

2. The mixture according to claim 1, wherein the polymer A) is synthesized from at least 40% by weight of C1-C20 alkyl (meth)acrylates.

3. The mixture according to either of claims 1 or 2, wherein the polymer is crosslinkable by irradiation with high-energy light.

4. The mixture according to any one of claims 1 to 3, wherein a photoinitiator is attached to the polymer.

5. The mixture according to any one of claims 1 to 4, wherein the polymer has a K value of 10 to 100 (tetrahydrofuran, 1% strength by weight solution, 21°C).

6. The mixture according to any one of claims 1 to 5, wherein the polymer is a solution polymer.

7. The mixture according to any one of claims 1 to 6, wherein the nonaromatic ring system of the compounds B1 is a bicyclic or polycyclic cycloaliphatic ring system.

8. The mixture according to any one of claims 1 to 6, wherein the nonaromatic ring system of the compounds B1 is an isocyanurate ring system.

9. The mixture according to any one of claims 1 to 8, wherein at least 50% by weight of the compounds B are compounds B1.

10. The mixture according to any one of claims 1 to 9, wherein compounds B1 consist of at least 10% by weight, based on the molar mass thereof, of carbon or nitrogen atoms which are part of a ring system.

11. The mixture according to any one of claims 1 to 10, wherein the compounds B) comprise on average 1 to 5 polymerizable groups per molecule.

12. The mixture according to any one of claims 1 to 11, wherein the polymerizable groups of the compounds B are acrylic or methacrylic groups.

13. The mixture according to any one of claims 1 to 12, wherein the weight fraction of the compounds B) is 5% to 70% by weight, based on the sum by weight of A) + B).

14. The mixture according to any one of claims 1 to 13, wherein the mixture comprises 0.0001 to 0.5 mol of a photoinitiator or of a photoinitiator group per 100 g of the sum by weight of polymer A) and compounds B).

15. The mixture according to any one of claims 1 to 14, wherein the mixture comprises less than 5 parts by weight of water or solvent, based on 100 parts by weight of the sum by weight of A) and B).

16. The use of the mixture according to any one of claims 1 to 15 as a pressure-sensitive adhesive.

17. A self-adhesive label, sheet or tape obtainable through use of the mixture according to any one of claims 1 to 15 as a pressure-sensitive adhesive.

18. A method of producing a self-adhesive article, which comprises applying a mixture according to any one of claims 1 to 15 to a backing and exposing it to high-energy radiation.

## Revendications

1. Mélange contenant
A) un polymère, qui peut être obtenu par polymérisation de composés polymérisables par voie radicalaire, et
B) des composés présentant des groupes éthyléniquement insaturés, polymérisables par voie radicalaire (en abrégé groupe polymérisable) et un poids moléculaire pondéral moyen Mw inférieur à 5000 g/mole
**caractérisé en ce qu'**il s'agit, pour au moins 10% en poids des composés B, de composés B1 présentant au moins un système cyclique non aromatique, où il s'agit, pour le système cyclique non aromatique des composés B1, d'un système cyclique de type isocyanurate ou d'un système cyclique cycloaliphatique, bicyclique ou polycyclique.

2. Mélange selon la revendication 1, **caractérisé en ce que** le polymère A) est constitué, à raison d'au moins 40% en poids, de (méth)acrylates de C₁-C₂₀-alkyle.

3. Mélange selon l'une quelconque des revendications 1 ou 2, **caractérisé en ce que** le polymère est réticulable par irradiation par de la lumière riche en énergie.

4. Mélange selon l'une quelconque des revendications 1 à 3, **caractérisé en ce qu'**un photo-initiateur est lié au polymère.

5. Mélange selon l'une quelconque des revendications 1 à 4, **caractérisé en ce que** le polymère présente une valeur K de 10 à 100 (mesurée dans du tétrahydrofuranne, solution à 1%, 21°C).

6. Mélange selon l'une quelconque des revendications 1 à 5, **caractérisé en ce qu'**il s'agit, pour le polymère, d'un polymère en solution.

7. Mélange selon l'une quelconque des revendications 1 à 6, **caractérisé en ce qu'**il s'agit, pour le système cyclique non aromatique des composés B1, d'un système cyclique cycloaliphatique bicyclique ou polycyclique.

8. Mélange selon l'une quelconque des revendications 1 à 6, **caractérisé en ce qu'**il s'agit, pour le système cyclique non aromatique des composés B1, d'un système cyclique de type isocyanurate.

9. Mélange selon l'une quelconque des revendications 1 à 8, **caractérisé en ce qu'**il s'agit, pour au moins 50% en poids des composés B, de composés B1.

10. Mélange selon l'une quelconque des revendications 1 à 9, **caractérisé en ce que** les composés B1 sont constitués, à raison d'au moins 10% en poids, par rapport à leur masse molaire, d'atomes de carbone ou d'azote, qui font partie d'un système cyclique.

11. Mélange selon l'une quelconque des revendications 1 à 10, **caractérisé en ce que** les composés B) contiennent en moyenne 1 à 5 groupes polymérisables par molécule.

12. Mélange selon l'une quelconque des revendications 1 à 11, **caractérisé en ce qu'**il s'agit, pour les groupes polymérisables des composés B, de groupes acryle ou méthacryle.

13. Mélange selon l'une quelconque des revendications 1 à 12, **caractérisé en ce que** la proportion pondérale des composés B) représente 5 à 70% en poids, par rapport à la somme en poids de A)+B).

14. Mélange selon l'une quelconque des revendications 1 à 13, **caractérisé en ce que** le mélange contient 0,0001 à 0,5 mole d'un photo-initiateur ou d'un groupe photo-initiateur par 100 g de la somme en poids du polymère A) et des composés B).

15. Mélange selon l'une quelconque des revendications 1 à 14, **caractérisé en ce que** le mélange contient moins de 5 parties en poids d'eau ou de solvant, par rapport à 100 parties en poids de la somme en poids de A) et de B).

16. Utilisation du mélange selon l'une quelconque des revendications 1 à 15 comme auto-adhésif

17. Etiquettes, feuilles ou bandes auto-adhésives pouvant être obtenues par l'utilisation d'un mélange selon l'une quelconque des revendications 1 à 15 comme auto-adhésif.

18. Procédé pour la préparation d'objets auto-adhésifs, **caractérisé en ce qu'**un mélange selon l'une quelconque des revendications 1 à 15 est appliqué sur un support et est irradié par un rayonnement riche en énergie.
